(19) Europäisches Patentamt / European Patent Office / Office européen des brevets

(11) **EP 4 811 490 A1**

(12) **EUROPEAN PATENT APPLICATION**


(43) Date of publication:
**23.09.2026 Bulletin 2026/39**

(21) Application number: **26165302.6**

(22) Date of filing: **17.03.2026**

(51) International Patent Classification (IPC):
***H01M 10/0587*** *(2010.01)* ***H01M 10/12*** *(2006.01)*
***H01M 10/0569*** *(2010.01)* ***H01M 50/533*** *(2021.01)*
***H01M 50/538*** *(2021.01)*

(52) Cooperative Patent Classification (CPC):
**H01M 10/0587; H01M 10/0569; H01M 10/123; H01M 50/533; H01M 50/538;** Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.03.2025 CN 202510314667**



(71) Applicant: **Xiamen Hithium Energy Storage Technology Co., Ltd.**
**Xiamen, Fujian 361100 (CN)**

(72) Inventors:
- **KUANG, Mao**
  **Xiamen, Fujian 361100 (CN)**
- **ZHOU, Wenyang**
  **Xiamen, Fujian 361100 (CN)**

(74) Representative: **RGTH**
**Patentanwälte PartGmbB**
**Mönckebergstraße 11**
**20095 Hamburg (DE)**


# (54) CYLINDRICAL BATTERY, ENERGY STORAGE DEVICE AND ENERGY STORAGE SYSTEM


(57) The present application provides a cylindrical battery, an energy storage device and an energy storage system. The cylindrical battery of the present application comprises: an electrolyte solution, and an electrode assembly. The electrolyte solution comprises an electrolyte salt and an organic solvent. The electrolyte salt has a mass fraction of y wt% in the electrolyte solution. The electrode assembly comprises an electrode sheet. The electrode sheet comprises a current collector and a plurality of tabs electrically connected to the current collector. The plurality of tabs are spaced on a same side of the current collector, with the spacing between two adjacent tabs being d in mm. The electrode assembly has a winding structure. The electrode assembly has a central hole with a diameter of L in mm. The battery also satisfies the relationship $d=10k_1 \cdot y-L$, wherein $k_1$ has a range satisfying 3.7 mm ≤ $k_1$ ≤ 17.14 mm. The cylindrical battery of the present application has relatively long cycle life.

100
20
10
11a/11
11b/11
12
L
13

Figure 2

EP 4 811 490 A1

## Description

## Technical Field

The present application relates to field of energy storage, and specifically to a cylindrical battery, an energy storage device and an energy storage system.

## Background Art

Cylindrical batteries per se have the characteristics of good individual consistency, high temperature resistance, safety and non-explosion, high energy density, and low internal resistance, which make them widely used under practical working conditions. However, the electrolyte solutions in prior art cylindrical batteries have poor processivity, which affects the electrical performance of cylindrical batteries and results in low cycle capacity retention rate and short cycle life of cylindrical batteries.

## Summary of the Invention

The present application provides a cylindrical battery having long cycle life.
In a first aspect, the present application provides a cylindrical battery, comprising:

an electrolyte solution comprising an electrolyte salt and an organic solvent, the electrolyte salt having a mass fraction of y wt% in the electrolyte solution; and
an electrode assembly comprising an electrode sheet, the electrode sheet comprising a current collector and a plurality of tabs electrically connected to the current collector, the plurality of tabs being spaced on a same side of the current collector, with the spacing between two adjacent tabs being d in mm; the electrode assembly having a winding structure and having a central hole with a diameter of L in mm;
wherein the battery also satisfies the relationship $d=10k_1 \cdot y-L$, wherein $k_1$ has a range satisfying 3.7 mm $\leq k_1 \leq$ 17.14 mm.

In some embodiments, the organic solvent comprises a cyclic carbonate and a linear carbonate, in which a mass ratio of the cyclic carbonate to the linear carbonate in the electrolyte solution is A; and
the battery satisfies the relationship $L \cdot d=10k_2 \cdot A$, wherein $k_2$ has a range satisfying 0.6 $mm^2 \leq k_2 \leq$ 23.53 $mm^2$.
In some embodiments, the mass fraction y wt% of the electrolyte salt in the electrolyte solution has a range satisfying 8.75 wt% ≤ y wt% ≤ 16.2 wt%.
In some embodiments, the spacing d between two adjacent tabs has a range satisfying 1 mm ≤ d ≤ 5 mm.
In some embodiments, the central hole of the electrode assembly has a diameter L has a range satisfying 5 mm ≤ L ≤ 10 mm.
In some embodiments, the mass ratio A of the cyclic carbonate to the linear carbonate in the electrolyte solution has a range satisfying 0.17 ≤ A ≤ 0.67.
In some embodiments, the electrode assembly is wound by M rounds, the M rounds comprise N steps wherein M > N and each step comprises a plurality of rounds. Each round of the electrode sheet comprises a plurality of tabs. The plurality of tabs of each step have the same size. From the outermost round to the innermost round of the electrode assembly, the tabs in different steps have gradually decreased width and gradually decreased height.
In some embodiments, the number N of the steps of the electrode assembly has a range satisfying 2 ≤ N ≤ 10.
In some embodiments, a number n of the tabs of the electrode sheet has a range satisfying 400 ≤ n ≤ 2000.
In some embodiments, the tab in the step of the electrode assembly closest to the central hole has a height h1 in a range satisfying 2 mm ≤ h1 ≤ 6 mm.
In some embodiments, where the electrode assembly has a winding structure, the step farthest from the central hole has a radial width w1 in a range satisfying 100 mm ≤ w1 ≤ 300 mm.
In some embodiments, the electrode sheet comprises a tab-free area, which is arranged close to the central hole and connected to the step closest to the central hole. When the electrode assembly is flattened, the tab-free area has a length s1 in a range satisfying 100 mm ≤ s1 ≤ 500 mm.
In some embodiments, the electrode sheet corresponding to the innermost step of the electrode assembly, when flattened, has a length s2 in a range satisfying 300 mm ≤ s2 ≤ 500 mm.
In a second aspect, the present application further provides an energy storage device, comprising:

a housing; and
a plurality of the cylindrical batteries of the present application, contained in the housing.

In a third aspect, the present application provides an energy storage system, comprising:

the energy storage device of the present application; and
an electric energy conversion device, which is electrically connected to the energy storage device, and is arranged to convert other forms of energy into electric energy, wherein the energy storage device is arranged for storing said electric energy.

The cylindrical battery of the present application satisfies the relationship $L \cdot d=10k_2 \cdot A$. By designing the relation $L \cdot d=10k_2 \cdot A$ and the $k_2$ value, the cylindrical battery has better wettability by the electrolyte solution, so that the gravimetric capacity of the cylindrical battery can be better utilized. The cylindrical battery has a higher ambient temperature cycle capacity retention rate, and thus has a higher ambient temperature cycle service life.

**Brief Description of the Drawings**

In order to more clearly illustrate the technical solutions of the present application, the drawings required for use in the embodiments will be briefly introduced below. Obviously, the drawings described below are some embodiments of the present application. For a person having ordinary skills in the art, other drawings can be obtained based on these drawings without inventive work.

Figure 1 is a schematic structure of a cylindrical battery according to an embodiment of the present application.
Figure 2 is a schematic cross-sectional view of a cylindrical battery according to an embodiment of the present application along the A-A direction in Figure 1.
Figure 3 is a schematic structure of an electrode sheet according to an embodiment of the present application when flattened.
Figure 4 is schematic vertical view of an electrode assembly according to an embodiment of the present application when wound.
Figure 5 is a schematic cross-sectional view of a positive electrode sheet according to an embodiment of the present application.
Figure 6 is a schematic cross-sectional view of a negative electrode sheet according to an embodiment of the present application.
Figure 7 is a schematic structure of an energy storage device according to an embodiment of the present application.
Figure 8 is a structural block diagram of an energy storage system according to an embodiment of the present application.
Figure 9 is an application scenario diagram of an energy storage system according to an embodiment of the present application.

Description of reference numbers:
100 - cylindrical battery, 10 - electrode assembly, 11 - electrode sheet, 111 - current collector, 112 - tab, 11a - positive electrode sheet, 111a - positive electrode current collector, 112a - positive electrode tab, 113a - positive electrode active layer, 11b - negative electrode sheet, 111b - negative electrode current collector, 112b - negative electrode tab, 113b - negative electrode active layer, 12 - separator, 13 - central hole, 14 - tab-free area, 15 - step, 20 - shell, 30 - end cover assembly, 200 - energy storage device, 210 - housing, 300 - energy storage system, 310 - electric energy conversion device.

**Specific Embodiments**

In order to enable a person skilled in the art to better understand the technical solutions of the present application, the technical solutions in the embodiments of the present application will be clearly and completely described below by referring to the drawings. Obviously, the described embodiments are only part, not all, of the embodiments of the present application. All other embodiments obtainable by a person having ordinary skills in the art based on the embodiments described herein without inventive work are within the scope of protection of the present application.
The terms "first", "second", etc. are used in the Description, the Claims and the above-mentioned drawings of the present application to distinguish different objects, rather than to describe a specific order. In addition, the terms "comprise" and "have" and any variation thereof are intended to be non-exclusive. For example, a process, method, system, product or equipment that comprises a series of steps or units is not limited to the listed steps or units, but optionally comprises steps or units that are not listed, or optionally comprises other steps or units inherent to the process, method, product or equipment.
In the following, the technical solutions in the embodiments of the present application will be described by

referring to the drawings.

It should be noted that, for the convenience of illustration, in the embodiments of the present application, the same reference numbers represent the same components, and for the sake of brevity, detailed descriptions of the same components in different embodiments are omitted.

At present, generation of green electricity generally relies on photovoltaics, wind energy, and water potential, etc., while wind and solar energies generally have problems of strong intermittency and large fluctuation, which may cause instability in the power grid, i.e. insufficient electricity during peak hours, and too much electricity during valley hours. Unstable voltage will also cause damage to electric equipment. Therefore, insufficient electricity demand or insufficient grid acceptance capacity may cause the problem of abandoning wind and solar energies. Solutions to this problem must rely on energy storage. That is, converting electrical energy into other forms of energy by physical or chemical means and storing it, and converting said energy into electrical energy and releasing it when needed. In simple terms, energy storage is like a large "power bank". When photovoltaic and wind energy are sufficient, electrical energy is stored and the stored electricity is released when needed.

Batteries are the smallest energy storage units of energy storage devices and energy storage systems. The performance of batteries directly affects the performance and application of energy storage devices and energy storage systems.

Cylindrical batteries per se have the characteristics of good individual consistency, high temperature resistance, safety and non-explosion, high energy density and low internal resistance, which make them widely used under practical working conditions. However, the electrolyte solutions in prior art cylindrical batteries have poor processivity, which affects the electrical performance of cylindrical batteries and results in low cycle capacity retention rate and short cycle life of cylindrical batteries.

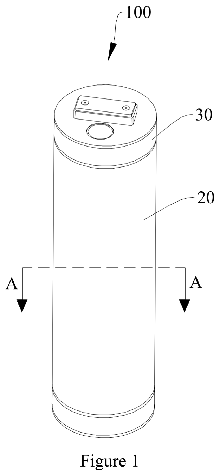

Referring to Figures 1 to 3, the present application provides a cylindrical battery 100, which comprises an electrolyte solution and an electrode assembly 10. The electrolyte solution comprises an electrolyte salt and an organic solvent. The electrolyte salt has a mass fraction of y wt% in the electrolyte solution. The electrode assembly 10 comprises an electrode sheet 11, which comprises a current collector 111 and a plurality of tabs 112 electrically connected to the current collector 111. The plurality of tabs 112 are spaced on a same side of the current collector 111, with the spacing between two adjacent tabs 112 being d in mm. The electrode assembly 10 has a winding structure, and has a central hole 13 with a diameter of L in mm. The cylindrical battery 100 also satisfies the relationship $d=10k_1 \cdot y-L$, wherein $k_1$ has a range satisfying 3.7 mm $\leq k_1 \leq$ 17.14 mm.

The cylindrical battery 100 of the present application can be applied in energy storage devices such as battery modules (also called energy storage modules), small energy storage boxes, and large energy storage cabinets. The energy storage device is used to store electrical energy, which may be can supplied to electrical loads such as street lamps and household appliances when the electricity price is at a peak, or to supply power during power grid disconnection/outage.

The term "plurality" means greater than or equal to two.

It should be noted that the electrode assembly 10 of the cylindrical battery 100 is wound using a winding pin having a certain diameter. Therefore, there is a cylindrical central hole 13 in the center of the wound electrode assembly 10, and the diameter of the central hole 13 is related to the diameter of the winding pin.

It should be noted that the spacing d between two adjacent tabs 112 in an embodiment of the present application refers to the minimum spacing d between two adjacent tabs 112 along the length direction of the electrode assembly 10 or the electrode sheet 11 when the electrode assembly 10 or the electrode sheet 11 is flattened. It can also be understood that the spacing d refers to the spacing between the roots of two adjacent tabs 112, i.e. the spacing between the roots where the two adjacent tabs 112 is connected to the current collector 111.

It should be noted that the central hole 13 of the electrode assembly 10 refers to a hollow hole in the middle position after the electrode assembly 10 is wound.

Optionally, the electrode assembly 10 comprises a positive electrode sheet 11a, a separator 12 and a negative electrode sheet 11b, wherein the separator 12 is located between the positive electrode sheet 11a and the negative electrode sheet 11b, for separating the positive electrode sheet 11a from the negative electrode sheet 11b. It should be noted that the electrode assembly 10 is at least partly immersed in the electrolyte solution.

Optionally, the electrode sheet 11 may be a positive electrode sheet 11a or a negative electrode sheet 11b. When the electrode sheet 11 is the positive electrode sheet 11a, the current collector 111 is the positive electrode current collector 111a, and the tab 112 is the positive electrode tab 112a. When the electrode sheet 11 is the negative electrode sheet 11b, the current collector 111 is the negative electrode current collector 111b, and the tab 112 is the negative electrode tab 112b. Optionally, a plurality of positive electrode tabs 112a of the cylindrical battery 100 are located on a same side of the cylindrical battery 100, and a plurality of negative electrode tab 112b are all located on the other side of the cylindrical battery 100.

Optionally, the tab 112 of the present application may be, but is not limited to, a die-cut tab.

Specifically, the $k_1$ value may be, but is not limited to, 3.7 mm, 4.0 mm, 5.0 mm, 6.0 mm, 7.0 mm, 8.0 mm, 9.0 mm,

10.0 mm, 11.0 mm, 12.0 mm, 13.0 mm, 14.0 mm, 15.0 mm, 16.0 mm, 17.0 mm, 17.14 mm, etc.

In this embodiment, when the $k_1$ value is too low, it is necessary to make the content of the electrolyte salt (such as lithium salt) in the electrolyte solution higher, and the diameter L of the central hole 13 and the spacing d between the roots of adjacent tabs 112 smaller. If the content of the electrolyte salt in the electrolyte solution is too high, it may lead to an increase in the density and viscosity of the electrolyte solution, affecting the wettability in the cylindrical battery 100 system, and at the same time increasing the cost of the cylindrical battery 100. If the diameter L of the central hole 13 and the spacing d between the roots of adjacent tabs 112 are too small, there will be insufficient wetting channel for the injected electrolyte solution, leading to insufficient wetting.

In this embodiment, when the $k_1$ value is too high, it is necessary to make the content of the electrolyte salt (such as lithium salt) in the electrolyte solution lower, and the diameter L of the central hole 13 and the spacing d between the roots of adjacent tabs 112 larger. If the content of the electrolyte salt in the electrolyte solution is too low, the amount of mobile lithium ions is reduced, the conductivity is reduced, the polarization is increased, and the consumption of the electrolyte solution is increased, such that the cylindrical battery 100 has insufficient cycle life at a later stage. Meanwhile, if the diameter of the central hole 13 is designed to be larger, the design area of the electrode sheet 11 will be squeezed, such that the design of the electrode sheet 11 tends to be in the direction of high compaction, which affects the wetting of the electrode sheet 11, and deteriorates the cycle performance. If the spacing d between the roots of adjacent tabs 112 is designed to be too large, although it favors the wetting by the injected electrolyte solution, the area for welding the tabs 112 will become less, which is easy to cause the risks of poor welding and pseudo soldering.

The cylindrical battery 100 of the present application satisfies the relationship $d=10k_1 \cdot y\text{-}L$. By designing the relationship $d=10k_1 \cdot y\text{-}L$ and the $k_1$ value, the cylindrical battery 100 has better wettability by the electrolyte solution, so that the gravimetric capacity of the cylindrical battery 100 can be better utilized. The cylindrical battery 100 has higher ambient temperature cycle capacity retention rate, and thus has higher ambient temperature cycle service life.

In some embodiments, the organic solvent comprises a cyclic carbonate and a linear carbonate, the mass ratio of the cyclic carbonate to the linear carbonate in the electrolyte solution is A, and the cylindrical battery 100 satisfies the relationship $L \cdot d=10k_2 \cdot A$, wherein $k_2$ has a range satisfying $0.6\ mm^2 \leq k_2 < 23.53\ mm^2$.

Specifically, the $k_2$ value may be, but is not limited to, 0.6 $mm^2$, 0.8 $mm^2$, 1.0 $mm^2$, 2.0 $mm^2$, 3.0 $mm^2$, 4.0 $mm^2$, 6.0 $mm^2$, 8.0 $mm^2$, 10.0 $mm^2$, 12.0 $mm^2$, 14.0 $mm^2$, 16.0 $mm^2$, 18.0 $mm^2$, 20.0 $mm^2$, 22.0 $mm^2$, 23.53 $mm^2$, etc.

In this embodiment, when the $k_2$ value is too low, it is necessary to make the ratio of the cyclic carbonate to the linear carbonate in the electrolyte solution lower, and the diameter L of the central hole 13 and the spacing d between the roots of adjacent tabs 112 smaller. If the ratio of the cyclic carbonate to the linear carbonate in the electrolyte solution is too low, the dissociation ability of the electrolyte solution decreases, and at the same time, the proportion of low-boiling point linear carbonate is high, which is easy to exacerbate the consumption of the electrolyte solution and gas generation under high temperature, causing the capacity loss of the cylindrical battery 100, and affecting the life of the cylindrical battery 100. If the diameter L of the central hole 13 and the spacing d between the roots of adjacent tabs 112 are too small, there will be insufficient wetting channel for the injected electrolyte solution, leading to insufficient wetting.

In this embodiment, when the $k_2$ value is too high, it is necessary to make the ratio of the cyclic carbonate to the linear carbonate in the electrolyte solution larger, the diameter L of the central hole 13 and the spacing d between the roots of adjacent tabs 112 larger. Where the ratio A of the cyclic carbonate to the linear carbonate is larger, the mass proportion of the cyclic carbonate in the electrolyte is higher, and the viscosity of the electrolyte solution is larger. This leads to insufficient wetting of the electrode sheet 11, and deteriorates the low-temperature freezing point and therefore the low-temperature performance of the cylindrical battery 100. Meanwhile, if the diameter L of the central hole 13 is designed to be larger, the design area of the electrode sheet 11 will be squeezed, such that the design of the electrode sheet 11 tends to be in the direction of high compaction, which affects the wetting of the electrode sheet 11, and deteriorates the cycle performance. If the spacing d between the roots of adjacent tabs 112 is too large, although it favors the wetting by the injected solution, the area for welding the tabs 112 will become less, which is easy to cause the risks of poor welding and pseudo soldering.

The cylindrical battery 100 of the present application satisfies the relationship $L \cdot d=10k_2 \cdot A$. By designing the relationship $L \cdot d=10k_2 \cdot A$ and the $k_2$ value, the cylindrical battery 100 has better wettability by the electrolyte solution, so that the gravimetric capacity of the cylindrical battery 100 can be better utilized. The cylindrical battery 100 has higher ambient temperature cycle capacity retention rate, and thus has higher ambient temperature cycle service life.

In some embodiments, the mass fraction y wt% of the electrolyte salt in the electrolyte solution has a range satisfying 8.75 wt% $\leq$ y wt% $\leq$ 16.2 wt%.

It can be understood that the y value has a range satisfying $8.75 \leq y \leq 16.2$.

Specifically, the mass fraction y wt% of the electrolyte salt in the electrolyte solution may be, but is not limited to, 8.75 wt%, 9 wt%, 9.5 wt%, 10 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.2 wt%, etc.

In this embodiment, if the mass fraction of the electrolyte salt in the electrolyte solution is too low, the diffusion rate of the electrolyte ions (such as lithium ions) is too low, and the ionic conductivity of the electrolyte solution is too low, such that the cylindrical battery 100 is easy to be polarized, leading to lithium precipitation, and reducing the kinetic performance

and cycle capacity retention rate of the cylindrical battery 100. If the mass fraction of the electrolyte salt in the electrolyte solution is too high, the viscosity of the electrolyte solution is increased, the wetting ability of the electrolyte solution is reduced, and the wettability of electrode assembly 10 by the electrolyte solution is reduced, thereby reducing the utilization of the gravimetric capacity of the cylindrical battery 100 and reducing the cycle capacity retention rate of the cylindrical battery 100.

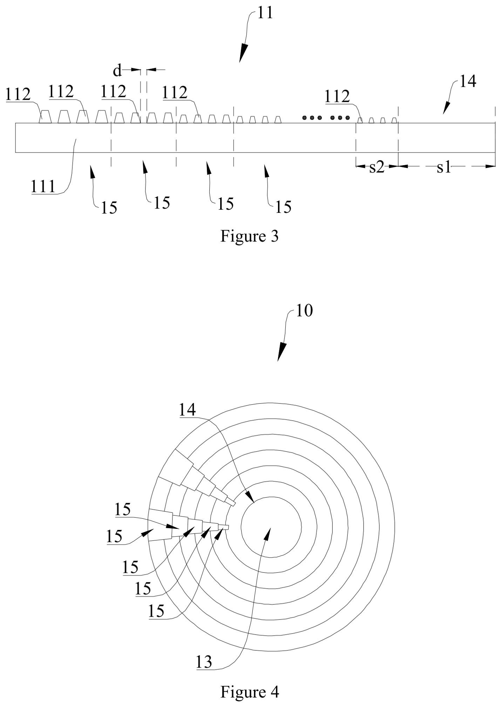

Referring to Figure 3, in some embodiments, the spacing d between two adjacent tabs 112 has a range satisfying 1 mm $\leq$ d $\leq$ 5 mm.

Specifically, the spacing d between two adjacent tabs 112 may be, but is not limited to, 1 mm, 1.3 mm, 1.5 mm, 1.8 mm, 2 mm, 2.3 mm, 2.5 mm, 2.8 mm, 1 mm, 3.3 mm, 3.5 mm, 3.8 mm, 1 mm, 4.3 mm, 4.5 mm, 4.8 mm, 5 mm.

In this embodiment, the spacing between two adjacent tabs 112 in the cylindrical battery 100 is related to the size of the reserved gap after the electrode assembly 10 is wound, and the wettability of the cylindrical battery 100 by the injected electrolyte solution. The larger the spacing d between two adjacent tabs 112 is, the stronger the wetting ability of the electrolyte solution will be. Therefore, when the spacing d between two adjacent tabs 112 is too small, the electrolyte solution will not easily penetrate to the electrode sheet 11 at the center of the electrode assembly 10, which will reduce the wetting ability of the electrolyte solution, affect the utilization of the gravimetric capacity of the electrode assembly 10, and reduce the cycle capacity retention rate of the cylindrical battery 100. When the spacing d between two adjacent tabs 112 is too large, the area of the tab 112 is too small, affecting the area and the strength of the welding between the tab 112 and the current collector, leading to uneven distribution of the current between the electrode sheets 11, reducing the electron transport speed on the electrode sheets 11, such that the capacity of the cylindrical battery 100 cannot be effectively utilized, and the dynamic performance of the cylindrical battery 100 is reduced. In addition, the resistance of the welding area between the tab 112 and the current collector is too low, increasing the risk of overcurrent melting.

Optionally, the electrolyte salt may be a lithium salt.

Optionally, the lithium salt may include, but is not limited to, at least one of lithium hexafluorophosphate ($LiPF_6$), lithium tetrafluoroborate ($LiBF_4$), lithium bis(fluorosulfonyl)imide (LiFSI), lithium bis(trifluoromethanesulfonyl)imide (LiTFSI), lithium bis(oxalato)borate (LiBOB), lithium difluorobis(oxalato)phosphate (LiODFP), lithium difluorobis(oxalato) borate (LiODFB), lithium difluorophosphate ($LiPO_2F_2$), lithium trifluoromethanesulfonate ($CF_3SO_3Li$), etc.

In some embodiments, the mass ratio A of the cyclic carbonate to the linear carbonate in the electrolyte solution has a range satisfying 0.17 $\leq$ A $\leq$ 0.67.

Specifically, the mass ratio A of the cyclic carbonate to the linear carbonate in the electrolyte solution may be, but is not limited to, 0.17, 0.2, 0.25, 0.3, 0.35, 0.4, 0.45, 0.5, 0.55, 0.6, 0.65, 0.67, etc.

In this embodiment, if the mass ratio A of the cyclic carbonate to the linear carbonate in the electrolyte solution is too low, the dissociation ability of lithium ions is reduced, the conductivity of the electrolyte solution is reduced, and thus the kinetic performance of the cylindrical battery 100 is reduced. If the mass ratio A of the cyclic carbonate to the linear carbonate in the electrolyte solution is increased, the electrolyte solution can have a higher ability to dissociate lithium ions, thereby improving the conductivity of the electrolyte solution, and improving the cycle performance of the cylindrical battery 100. However, when the mass ratio A of the cyclic carbonate to the linear carbonate in the electrolyte solution is too high, the viscosity and freezing point of the electrolyte solution of the cylindrical battery 100 will be affected, thereby increasing the difficulty of wetting the cylindrical battery 100 by the electrolyte solution, and also reducing the cycle capacity retention rate of the cylindrical battery 100.

Optionally, the cyclic carbonate may include, but is not limited to, at least one of ethylene carbonate (EC), propylene carbonate (PC), etc. The dielectric constant of ethylene carbonate is much greater than that of propylene carbonate, and ethylene carbonate can better promote the formation of a solid electrolyte interface membrane (SEI).

Optionally, the linear carbonate may include, but is not limited to, at least one of dimethyl carbonate (DMC), diethyl carbonate (DEC), ethyl methyl carbonate (EMC), etc.

Optionally, the organic solvent further comprises at least one of ethyl acetate, propyl acetate, ethyl propionate, propyl propionate, $\gamma$-butyrolactone and 2,2-difluoroethyl acetate. In the organic solvent, the total mass percentage of ethyl acetate, propyl acetate, ethyl propionate, propyl propionate, $\gamma$-butyrolactone and 2,2-difluoroethyl acetate is 0 to 20 wt%. Specifically, the total mass percentage may be, but is not limited to, 0, 3 wt%, 5 wt%, 8 wt%, 10 wt%, 13 wt%, 15 wt%, 18 wt%, 20 wt%, etc.

Optionally, in the electrolyte solution, the mass fraction of the organic solvent is 60 wt% to 85 wt%. Specifically, the mass fraction of the organic solvent may be, but is not limited to, 60 wt%, 65 wt%, 70 wt%, 75 wt%, 80 wt%, 85 wt%, etc.

Optionally, the electrolyte solution further comprises a film-forming additive. When the cylindrical battery 100 is a lithium-ion battery, the film-forming additive may be used to promote the formation of an interface film in at least one of the positive electrode sheet 11a and the negative electrode sheet 11b, and maintain the stability of the interface film.

Optionally, the film-forming additive may include, but is not limited to, at least one of propargylbenzenesulfonic acid, vinylene carbonate (VC), fluoroethylene carbonate (FEC), ethylene sulfate (DTD), methylene methanedisulfonate (MMDS), butane sultone (BS), 1,3-propene sultone (PST), etc.

Optionally, the mass fraction of the film-forming additive in the electrolyte solution is in a range of 0.1 wt% to 10

wt%. Specifically, the mass fraction of the film-forming additive may be, but is not limited to, 0.1 wt%, 0.3 wt%, 0.5 wt%, 0.8 wt%, 1 wt%, 1.5 wt%, 2 wt%, 2.5 wt%, 3 wt%, 3.5 wt%, 4 wt%, 4.5 wt%, 5 wt%, 6 wt%, 7 wt%, 8 wt%, 9 wt%, 10 wt%, etc.

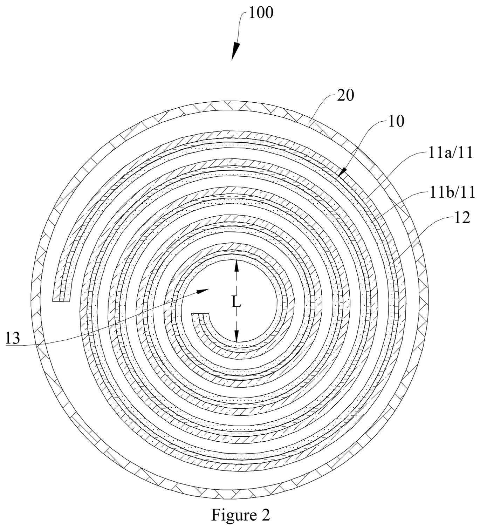

Referring to Figure 2 again, in some embodiments, the diameter L of the central hole 13 of the electrode assembly 10 has a range satisfying 5 mm ≤ L ≤ 10 mm.

Specifically, the diameter L of the central hole 13 of the electrode assembly 10 may be, but is not limited to, 5 mm, 5.5 mm, 6 mm, 6.5 mm, 7 mm, 7.5 mm, 8 mm, 8.5 mm, 9 mm, 9.5 mm, 10 mm, etc.

In this embodiment, if the diameter L of the central hole 13 of the electrode assembly 10 is too small, the size of the channel reserved in the electrode assembly 10 for the electrolyte solution is too small, which reduces the wetting ability of the electrolyte solution, thereby affecting the utilization of the gravimetric capacity of the electrode assembly 10, and reducing the cycle capacity retention rate of the battery. If the diameter L of the central hole 13 of the electrode assembly 10 is increased, the wetting area of the electrode assembly 10 can be increased, and the wetting ability of the electrolyte solution can be increased. However, if the diameter L of the central hole 13 of the electrode assembly 10 is too large, the volumetric energy density of the cylindrical battery 100 will be excessively reduced.

Referring to Figures 3 and 4 together, in some embodiments, the number of rounds of the electrode assembly 10 being wound is M, and M rounds include N steps 15, wherein M > N. Each step 15 comprises a plurality of rounds. Each round of the electrode sheet 11 comprises a plurality of tabs 112. The plurality of tabs 112 of each step 15 have the same size. From the outermost round to the innermost round of the electrode assembly 10, the tabs 112 in different steps 15 have gradually decreased width and gradually decreased height.

It should be noted that the width of the tab 112 refers to the width of the tab 112 along the arrangement direction of the plurality of tabs 112. The height of the tab 112 refers to the height of the tab 112 along the arrangement direction perpendicular to the plurality of tabs 112 (i.e. along the arrangement direction of the tab 112 and the current collector 111).

It can be understood that the tab 112 of the outermost step 15 has the largest width and height, and the tab 112 of the step 15 closest to the central hole 13 has the smallest width and height.

It can be understood that the plurality of tabs 112 on the same step 15 have the same width and height.

It should be noted that among the plurality of tabs 112 on the electrode sheet 11, the spacing between any two adjacent tabs 112 is the same.

In this embodiment, by making both the width and the height of the tabs 112 on different steps 15 gradually decrease in the direction from the outermost round to the innermost round of the electrode assembly 10, the gradient change of the width and height of the tabs 112 on different steps 15 allows better welding of the tabs 112 and the current collector, and improves the welding strength between the tabs 112 and the current collector.

In some embodiments, the number N of the steps 15 of the electrode assembly 10 has a range satisfying 2 ≤ N ≤ 10.

Specifically, the number N of the steps 15 of the electrode assembly 10 may be, but is not limited to, 2, 3, 4, 5, 6, 7, 8, 9, 10, etc.

In this embodiment, if the number N of the steps 15 of the electrode assembly 10 is too small, the die-cutting the tabs 112 becomes difficult, and the welding amount of the short tab 112 area (the area with shorter tabs 112, i.e. the tabs 112 on the steps 15 close to the central hole 13) is reduced, such that when the tab 112 is welded to the current collector 111, poor welding and pseudo soldering may readily occur, reducing the conformity rate of the cylindrical battery 100. If the number N of the steps 15 of the electrode assembly 10 is too large, the number of the tabs 112 to be die-cut increases, and the number of short tabs 112 increases, thus increasing the difficulty of die-cutting the tabs 112.

In some embodiments, the number n of the tabs 112 of the electrode sheet 11 has a range satisfying 400 ≤ n ≤ 2000.

It should be noted that n > M.

It can be understood that the total number of the tabs 112 on each electrode sheet 11 is in a range of 400 to 2000. For example, when the electrode sheet 11 is the positive electrode sheet 11a, the total number of the tabs 112 on the positive electrode sheet 11a (i.e. the positive electrode tab 112a) is in a range of 400 to 2000. For another example, when the electrode sheet 11 is the negative electrode sheet 11b, the total number of the tabs 112 on the negative electrode sheet 11b (i.e. the negative electrode tab 112b) is in a range of 400 to 2000.

Specifically, the number n of the tabs 112 of the electrode sheet 11 may be, but is not limited to, 400, 450, 500, 600, 700, 800, 900, 1000, 1100, 1200, 1300, 1400, 1500, 1600, 1700, 1800, 1900, 2000, etc.

In this embodiment, if the number of the tabs 112 on the electrode sheet 11 is too small, the width of each tab 112 is too large. When the tab 112 is welded to the current collector 111, it is easy to cause bulges and wrinkles between adjacent die-cut tabs 112, which easily causes poor welding of the tab 112. The tabs 112 are bent and squeeze inward, causing a short circuit in the electrical connection between the positive electrode sheet 11a and the negative electrode sheet 11b. In this embodiment, if the number of the tabs 112 on the electrode sheet 11 is too large, it increases the difficulty of the die-cutting process of the tabs 112, making the tabs 112 easy to bend or break when die-cutting the tabs 112, thereby reducing the conformity rate of the electrode assembly 10.

In some embodiments, the height h1 of the tab 112 of the step 15 of the electrode assembly 10 closest to the

central hole 13 has a range satisfying 2 mm ≤ h1 ≤ 6 mm.

It can be understood that the height h1 of the shortest tab 112 on the electrode sheet 11 has a range satisfying 2 mm ≤ h1 ≤ 6 mm.

Specifically, the height h1 of the tab 112 of the step 15 of the electrode assembly 10 closest to the central hole 13 may be, but is not limited to, 2.0 mm, 2.5 mm, 3.0 mm, 3.5 mm, 4.0 mm, 4.5 mm, 5.0 mm, 5.5 mm, 6.0 mm, etc.

In this embodiment, if the height h1 of the tab 112 of the step 15 of the electrode assembly 10 closest to the central hole 13 is too low, poor welding may readily occur when the tab 112 in the innermost round is welded to the current collector, such that the current density distribution of the current collector 111 becomes uneven, and the electron transport speed of the current collector 111 of the electrode sheet 11 close to the central hole 13 becomes slow, thereby reducing the dynamic performance of the cylindrical battery 100. If the height h1 of the tab 112 of the step 15 of the electrode assembly 10 closest to the central hole 13 is too high, then after the electrode assembly 10 wound into a cylindrical shape, the tab 112 should be bent relative to the current collector 111 and then welded to the current collector. After the tab 112 is bent, the bent tab 112 is easy to overlap with the tab-free area, such that the positive electrode tab 112a overlaps with the negative electrode current collector 111b or negative electrode tab 112b overlaps with the positive electrode current collector 111a, causing a short circuit in the cylindrical battery 100.

In some embodiments, when the electrode assembly 10 is in a wound structure, the radial width w1 of the step 15 farthest from the central hole 13 has a range satisfying 100 mm ≤ w1 ≤ 300 mm.

It can be understood that among the N steps 15 of the electrode assembly 10 along the radial direction of the wound electrode assembly 10, the width w1 of the outermost step 15 of the electrode assembly 10 has a range satisfying 100 mm ≤ w1 ≤ 300 mm. It can also be understood that when the electrode assembly 10 is in a wound structure, the radial width w1 of the outermost step 15 has a range satisfying 100 mm ≤ w1 ≤ 300 mm.

Specifically, when the electrode assembly 10 is in a wound structure, the radial width w1 of the step 15 farthest from the central hole 13 may be, but is not limited to, 100 mm, 120 mm, 140 mm, 160 mm, 180 mm, 200 mm, 220 mm, 240 mm, 260 mm, 280 mm, 300 mm, etc.

In this embodiment, when the electrode assembly 10 is in a wound structure, if the radial width w1 of the step 15 farthest from the central hole 13 is too small, poor welding may readily occur when the tab 112 on the outermost step 15 of the electrode assembly 10 is welded to the current collector. When the electrode assembly 10 is in a wound structure, if the radial width w1 of the step 15 farthest from the central hole 13 is too large, this may easily lead to insufficient welding between the tab 112 on the inner round close to the central hole 13 and the current collector, resulting in uneven current density distribution of the current collector 111, slow electron transport speed at the position where the current collector 111 of the electrode sheet 11 is close to the central hole 13, and reduced dynamic performance of the cylindrical battery 100.

Referring to Figure 3, in some embodiments, the electrode sheet 11 comprises a tab-free area 14 which is arranged close to the central hole 13 and connected to the step 15 closest to the central hole 13. When the electrode assembly 10 is flattened, the length s1 of the tab-free area 14 has a range satisfying 100 mm ≤ s1 ≤ 500 mm.

It should be noted that when the electrode assembly 10 is in a wound structure, the tab-free area 14 is located within the innermost step 15, i.e. the innermost step 15 is disposed around the periphery of the tab-free area 14.

Specifically, when the electrode assembly 10 is flattened, the length s1 of the tab-free area 14 may be, but is not limited to, 100 mm, 150 mm, 200 mm, 250 mm, 300 mm, 350 mm, 400 mm, 450 mm, 500 mm, etc.

In this embodiment, if the length s1 of the tab-free area 14 when the electrode assembly 10 is flattened is too small, then after the electrode assembly 10 is formed, the tab 112 will be bent relative to the current collector 111 and then welded to the current collector. After the tab 112 is bent, the innermost tab 112 is easy to overlap with the tab-free area 14, such that the positive electrode tab 112a overlaps with the negative electrode current collector 111b or the negative electrode tab 112b overlaps with the positive electrode current collector 111a, thereby causing a short circuit in the cylindrical battery 100. If the length s1 of the tab-free area 14 when the electrode assembly 10 is flattened is too large, the area where the tab 112 on the step 15 of the electrode assembly 10 closest to the central hole 13 is welded to the current collector is insufficient, resulting in uneven current density distribution of the electrode sheet 11 corresponding to the tab-free area 14, which is easy to cause capacity loss of the cylindrical battery 100 during charging and discharging.

In some embodiments, the length s2 of the electrode sheet 11 corresponding to the innermost step 15 of the electrode assembly 10 when flattened has a range satisfying 300 mm ≤ s2 ≤ 500 mm.

It can be understood that the length s2 of the electrode sheet 11 corresponding to the step 15 connected to the tab-free area 14 when flattened has a range satisfying 300 mm ≤ s2 ≤ 500 mm.

Specifically, the length s2 of the electrode sheet 11 corresponding to the innermost step 15 of the electrode assembly 10 when flattened may be, but is not limited to, 300 mm, 320 mm, 340 mm, 360 mm, 380 mm, 400 mm, 420 mm, 440 mm, 460 mm, 480 mm, 500 mm, etc.

In this embodiment, if the length s2 of the electrode sheet 11 corresponding to the innermost step 15 of the electrode assembly 10 when flattened is too short, this may easily lead to insufficient welding between the tab 112 of the innermost step 15 and the current collector, such that the current passage path of the electrode sheet 11 corresponding to

the innermost step 15 is too long and the current density is too low. If the length s2 of the electrode sheet 11 corresponding to the innermost step 15 of the electrode assembly 10 when flattened is too long, the tab 112 on the innermost step 15 of the electrode assembly 10, when bent, would readily overlap with the electrode sheet 11 of the tab-free area 14, thereby causing a short circuit between the positive electrode sheet 11a and the negative electrode sheet 11b.

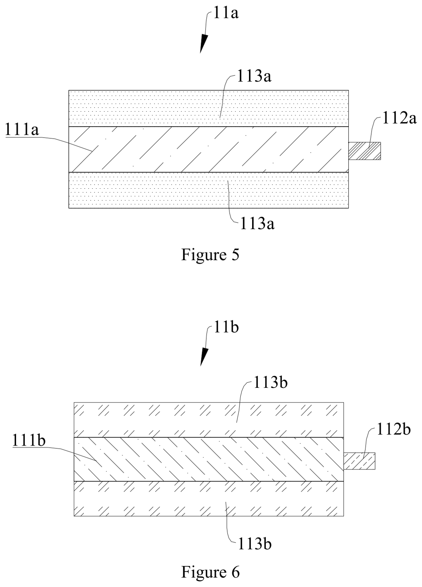

Referring to Figure 5, optionally, the positive electrode sheet 11a further comprises a positive electrode active layer 113a, which is arranged on a surface of the positive electrode current collector 111a. It can be understood that the positive electrode active layer 113a may cover one surface or two opposite surfaces of the positive electrode current collector 111a.

It can be understood that the positive electrode sheet 11a comprises a positive electrode current collector 111a, a positive electrode tab 112a and a positive electrode active layer 113a.

Optionally, the positive electrode current collector 111a may be, but is not limited to, an aluminum foil.

Optionally, the positive electrode active layer 113a comprises a positive electrode active material, a positive electrode conductive agent, a positive electrode binder, and a positive electrode thickener.

Optionally, the positive electrode active material may be, but is not limited to, lithium iron phosphate.

Optionally, the positive electrode conductive agent may be, but is not limited to, at least one of conductive carbon black, acetylene black, carbon nanotubes, carbon fibers, graphene, etc.

Optionally, the positive electrode binder may be, but is not limited to, at least one of Polyvinylidene Fluoride (PVDF), Polyamide (PA), Polyacrylonitrile (PAN), polyacrylate, polyvinylether, Polymethyl Methacrylate (PMMA), Polyhexafluoropropylene, Polymerized Styrene Butadiene Rubber (SBR), etc.

Optionally, in the positive electrode active layer 113a, the mass fraction of the positive electrode binder is in a range of 2 wt% to 4 wt%. Specifically, in the positive electrode active layer 113a, the mass fraction of the positive electrode binder may be, but is not limited to, 2 wt%, 2.5 wt%, 3 wt%, 3.5 wt%, 4wt%, etc. If the mass fraction of the positive electrode binder is too small, the positive electrode active layer 113a is prone to pulverization or crumbling. If the mass fraction of the positive electrode binder is too large, the energy density of the positive electrode sheet 11a is reduced.

Optionally, the positive electrode thickener may be, but is not limited to, at least one of sodium carboxymethyl cellulose (CMC), polyacrylamide (PAM) and polymethacrylate (PMA), etc.

Optionally, the separator 12 may be, but is not limited to, at least one of a polypropylene film (PP film), a polyethylene film (PE film), a ceramic separator 12, etc.

Optionally, the separator 12 has a thickness of 14 μm to 18 μm. Specifically, the thickness of the separator 12 may be, but is not limited to, 14 μm, 14.5 μm, 15 μm, 15.5 μm, 16 μm, 16.5 μm, 17 μm, 17.5 μm, 18 μm, etc.

Referring to Figure 6, optionally, the negative electrode sheet 11b further comprises a negative electrode active layer 113b, which is arranged on a surface of the negative electrode current collector 111. It can be understood that the negative electrode active layer 113b may cover one surface or two opposite surfaces of the negative electrode current collector 111.

It can be understood that the negative electrode sheet 11b comprises a negative electrode current collector 111b, a negative electrode tab 112b and a negative electrode active layer 113b.

Optionally, the negative electrode current collector 111 may be, but is not limited to, a copper foil.

Optionally, the negative electrode active layer 113b comprises a negative electrode active material, a negative electrode conductive agent, a negative electrode binder and a negative electrode thickener.

Optionally, the negative electrode active material may be, but is not limited to, graphite.

Optionally, the negative electrode conductive agent may be, but is not limited to, at least one of conductive carbon black (SP), acetylene black, carbon nanotubes, carbon fibers, graphene, etc.

Optionally, the negative electrode binder may be, but is not limited to, at least one of polyvinylidene fluoride, polyamide, polyacrylonitrile, polyacrylate, polyvinyl ether, polymethyl methacrylate, polyhexafluoropropylene, styrene-butadiene rubber, etc.

Optionally, the mass fraction of the negative electrode binder in the negative electrode active layer 113b is in a range of 2 wt% to 4 wt%. Specifically, the mass fraction of the negative electrode binder in the negative electrode active layer 113b may be, but is not limited to, 2 wt%, 2.5 wt%, 3 wt%, 3.5 wt%, 4 wt%, etc. If the mass fraction of the negative electrode binder is too small, the negative electrode active layer 113b is prone to pulverization or crumbling. If the mass fraction of the negative electrode binder is too large, the energy density of the negative electrode sheet 11b is reduced.

Optionally, the negative electrode thickener may be, but is not limited to, at least one of sodium carboxymethyl cellulose (CMC), polyacrylamide (PAM) and polymethacrylate (PMA), etc.

Referring to Figures 1 and 2 again, optionally, the cylindrical battery 100 further comprises a shell 20 and an end cover assembly 30. The shell 20 and the end cover assembly 30 enclose a receiving cavity (not shown), which is used to receive the electrolyte solution, the positive electrode sheet 11a, the separator 12 and the negative electrode sheet 11b.

The cylindrical battery 100 of the present application is further illustrated in the following by means of specific examples.

**Examples 1 to 21 and Comparative Examples 1 to 4**

The batteries of various Examples and Comparative Examples were prepared through the following steps.

(1) Preparation of electrolyte solution:

In a glove box under an argon atmosphere with a moisture content of ≤ 1 ppm, a solvent mixture of ethylene carbonate (EC, a cyclic carbonate), ethyl methyl carbonate (EMC, a linear carbonate), and dimethyl carbonate (DMC, a linear carbonate) was formulated according to the designed ratio of the solvents, in which the mass ratio of DMC/EMC was 2. After sealing to isolate from water, it was placed in a 0°C refrigerator and stabilized for 2 h, then taken out and quickly transferred to a glove box. The electrolyte salt, lithium hexafluorophosphate, was added, and stirred until the solute was completely and uniformly dissolved. After the temperature was stabilized, film-forming additives vinylene carbonate (VC, mass fraction of 3 wt%) and fluoroethylene carbonate (FEC, mass fraction of 1.5 wt%) were added and mixed uniformly to give the electrolyte solution. The mass ratios of the cyclic carbonate to the linear carbonate, A=EC:(EMC+DMC), in the electrolyte solutions of various Examples and Comparative Examples are shown in Table 1 below. The mass fractions of lithium hexafluorophosphate in the electrolyte solutions of various Examples and Comparative Examples are shown in Table 1 below.

(2) Preparation of positive electrode sheet 11a:

Lithium iron phosphate ($LiFePO_4$) as the positive electrode active material, conductive carbon black (Super-P, the positive electrode conductive agent), and PVDF (the positive electrode binder) were mixed in a mass ratio of 94:3:3. N-methylpyrrolidone (NMP) was then added as a solvent to prepare a positive electrode slurry with a solid content of 60 wt%, which was stirred evenly. The positive electrode slurry was then evenly coated on a surface of an aluminum foil having a thickness of 10 μm as the positive electrode collector 111a. Then, after drying, cold pressing, slitting, and die-cutting, the positive electrode sheet 11a to be wound was obtained. The single-sided thickness of the positive electrode active layer was 100 μm.

(3) Preparation of negative electrode sheet 11b:

Artificial graphite as the negative electrode active material, sodium carboxymethyl cellulose (CMC, the thickener), conductive carbon black (Super-P, the negative electrode conductive agent) and styrene-butadiene rubber latex (SBR, the negative electrode binder) were mixed in a mass ratio of 96:2:1:1. Deionized water was added, and a negative electrode slurry with a solid content of 50 wt% was prepared and stirred evenly. The negative electrode slurry was evenly coated on a surface of a copper foil having a thickness of 6 μm as the negative electrode current collector 111b. After drying, cold pressing, slitting, and die-cutting, the negative electrode sheet 11b to be wound was obtained. The single-sided thickness of the negative electrode active layer was 70 μm.

(4) Preparation of separator 12:

A 16 μm polyethylene (PE) film was used as the separator 12.

(5) Assembly of cylindrical battery 100:

The above positive electrode sheet 11a, separator 12, and negative electrode sheet 11b were stacked in sequence so that the separator 12 was located between the positive electrode sheet 11a and the negative electrode sheet 11b for isolation. A cylindrical jelly roll was obtained after winding. After welding the tabs 112, the jelly roll was placed in an outer packaging shell. After drying, the electrolyte solution described above was injected. After the processes including standing at ambient temperature, forming, second injection, aging, welding, helium inspection, capacity testing and OCV testing, the cylindrical battery 100 was finally prepared. In the cylindrical battery 100, the number M of the winding rounds of the electrode assembly 10 was 80. The M rounds include N steps 15, and the number N of the steps 15 of the electrode assembly 10 was 5. The number n of the tabs 112 of the electrode sheet 11 was 1600. The height h1 of the tab 112 of the step 15 of the electrode assembly 10 closest to the central hole 13 was 4 mm. When the electrode assembly 10 was in a wound structure, the radial width w1 of the step 15 farthest from the central hole 13 was 200 mm. The tab-free area 14 is arranged close to the central hole 13 and connected to the step 15 closest to the central hole 13. When the electrode assembly 10 was flattened, the length s1 of the tab-free area 14 was 300 mm. The length s2 of the electrode sheet 11 corresponding to the innermost step 15 of the electrode assembly 10 when flattened was 350 mm.

The diameter L of the central hole 13 and the spacing d between two adjacent tabs 112 of each of the cylindrical

batteries 100 of the Examples and Comparative Examples are shown in Table 1 below.

The cylindrical batteries 100 of the Examples and Comparative Examples were subjected to the following performance tests:

(1) Wetting test:

The cylindrical batteries 100 qualified according to the design of the Examples and Comparative Examples but not filled with the electrolyte solution were used. 180 ± 3 g of the testing electrolyte solution was manually injected into the cylindrical battery 100 through the injection port of the cylindrical battery 100 with a syringe. The injected mass of the electrolyte solution was record as m1. Formation nails were inserted for sealing. The battery was allowed to stand in a stable environment at a high temperature of 45°C for 10 h. The cylindrical battery 100 was disassembled. The free electrolyte solution was poured out and the mass of the free electrolyte solution was recorded as m2. The wetting amount of the electrolyte solution = the injected mass of the electrolyte solution - the mass of the free electrolyte solution (m = m1 - m2).

(2) Charge and discharge cycle test:

The cylindrical battery 100 of each of the Examples and Comparative Examples was subjected to a constant current charge and discharge cycle test on a LANHE tester, in which the test temperature was 25°C, the charge and discharge rate was 1C, and the charge and discharge voltage window was 2.5V to 3.65V. The capacity retention rate after 500 cycles was calculated according to the equation:

Capacity retention rate after 500 cycles = (Discharge capacity after 500 cycles/ Discharge capacity of the first cycle) × 100%.

In the test, a complete charge and discharge process is usually called a charge and discharge cycle, that is, the battery is first charged from 2.5V to 3.65V, and then discharged from 3.65V to 2.5V, thereby forming a charge and discharge cycle. 500 cycles means repeating the above process 500 times.

(3) Capacity test:

The prepared cylindrical battery 100 was place in a 45°C constant temperature test cabinet, charged to 3.65V at 0.33C, and then discharged to 2.5V at 0.33C. The charge and discharge cycle was repeated three times within a range of 2.5V to 3.65V, and the discharge capacity of the third cycle was measured.

(4) Spacing d between the roots of adjacent tabs 112:

The designed tabs 112 were cut from a full tab 112 on a program-controlled die-cutting equipment. The spacing between the roots of the die-cut tabs 112 can be directly read by the die-cutting equipment or measured with a film ruler by measuring the spacing between the roots of the trapezoidal tabs 112.

(5) Diameter L of the central hole 13:

The electrode assembly 10 is wound with a winding pin. The L value may be measured by a digital vernier caliper.

The parameters of the cylindrical batteries 100 of various Examples and Comparative Examples are shown in Table 1 below.

Table 1. Parameters of cylindrical batteries 100 of various Examples and Comparative Examples

| Ex. and Com. Ex. | A | y | L/mm | d/mm | $k_2$/mm$^2$ | $k_1$/mm | Electrolyte solution wetting amount/g | Discharge capacity/A h | Cycle capacity retention rate after 500 cycles/% |
|---|---|---|---|---|---|---|---|---|---|
| Ex. 1 | 0.10 | 11.25 | 8 | 2 | 16.00 | 8.89 | 160 | 50.76 | 92.18 |
| Ex. 2 | 0.17 | 11.25 | 8 | 2 | 9.41 | 8.89 | 165 | 51.13 | 94.78 |

(continued)

| Ex. and Com. Ex. | A | y | L/mm | d/mm | $k_2$/mm$^2$ | $k_1$/mm | Electrolyte solution wetting amount/g | Discharge capacity/A h | Cycle capacity retention rate after 500 cycles/% |
|---|---|---|---|---|---|---|---|---|---|
| Ex. 3 | 0.25 | 11.25 | 8 | 2 | 6.40 | 8.89 | 165 | 52.67 | 96.23 |
| Ex. 4 | 0.67 | 11.25 | 8 | 2 | 2.39 | 8.89 | 145 | 51.89 | 92.54 |
| Ex. 5 | 0.70 | 11.25 | 8 | 2 | 2.29 | 8.89 | 130 | 49.12 | 91.13 |
| Ex. 6 | 0.25 | 11.25 | 3 | 2 | 2.40 | 4.44 | 147 | 50.13 | 92.41 |
| Ex. 7 | 0.25 | 11.25 | 4 | 2 | 3.20 | 5.33 | 160 | 52.67 | 94.67 |
| Ex. 9 | 0.25 | 11.25 | 10 | 2 | 8.00 | 10.67 | 155 | 51.89 | 95.89 |
| Ex. 10 | 0.25 | 11.25 | 12 | 2 | 9.60 | 12.44 | 150 | 49.12 | 93.82 |
| Ex. 11 | 0.25 | 11.25 | 8 | 0 | 0.00 | 7.11 | 154 | 49.12 | 91.48 |
| Ex. 12 | 0.25 | 11.25 | 8 | 1 | 3.20 | 8.00 | 165 | 50.13 | 93.75 |
| Ex. 13 | 0.25 | 11.25 | 8 | 3 | 9.60 | 9.78 | 165 | 52.67 | 96.54 |
| Ex. 14 | 0.25 | 11.25 | 8 | 5 | 16.00 | 11.56 | 166 | 51.89 | 95.54 |
| Ex. 15 | 0.25 | 11.25 | 8 | 6 | 19.20 | 12.44 | 168 | 49.12 | 93.48 |
| Ex. 16 | 0.25 | 8.00 | 8 | 2 | 6.40 | 12.50 | 162 | 52.67 | 92.54 |
| Ex. 17 | 0.25 | 8.75 | 8 | 2 | 6.40 | 11.43 | 163 | 53.1 | 93.48 |
| Ex. 18 | 0.25 | 12.50 | 8 | 2 | 6.40 | 8.00 | 162 | 53.68 | 96.59 |
| Ex. 19 | 0.25 | 13.75 | 8 | 2 | 6.40 | 7.27 | 148 | 53.12 | 95.51 |
| Ex. 20 | 0.25 | 16.20 | 8 | 2 | 6.40 | 6.17 | 145 | 51.12 | 92.26 |
| Ex. 21 | 0.25 | 16.50 | 8 | 2 | 6.40 | 6.06 | 130 | 50.11 | 90.32 |
| Com. Ex. 1 | 0.25 | 11.25 | 3 | 0 | 0.00 | 2.67 | 110 | 50.73 | 88.43 |
| Com. Ex. 2 | 0.25 | 11.25 | 12 | 6 | 28.80 | 16.00 | 120 | 49.43 | 90.23 |
| Com. Ex. 3 | 0.10 | 8.00 | 8 | 2 | 16.00 | 12.50 | 156 | 50.27 | 90.07 |
| Com. Ex. 4 | 0.10 | 8.00 | 3 | 0 | 0.00 | 3.75 | 132 | 50.12 | 88.88 |

From the test results for Examples 1 to 5 in Table 1, it can be seen that with the increase of the mass ratio A of the cyclic carbonate to the linear carbonate in the electrolyte solution increases and the decrease of the $k_2$ value, the electrolyte solution wetting amount of the cylindrical battery 100 gradually decreases, the discharge capacity of the cylindrical battery 100 first gradually increases and then gradually decreases, and the cycle capacity retention rate of the cylindrical battery 100 after 500 cycles at ambient temperature (25°C) first gradually increases and then gradually decreases. Therefore, when $0.17 \leq A \leq 0.67$ and $0.6 \leq k_2 \leq 23.53$, the cylindrical battery 100 has relatively high electrolyte solution wetting amount, discharge capacity and cycle capacity retention rate.

From the test results for Examples 3 and 6 to 10 in Table 1, it can be seen that with the increase of the diameter L of the central hole 13 of the electrode assembly 10 and the increase of the $k_1$ and $k_2$ values, the electrolyte solution wetting amount of the cylindrical battery 100 first gradually increases and then gradually decreases, the discharge capacity of the cylindrical battery 100 first gradually increases and then gradually decreases, and the cycle capacity retention rate of the cylindrical battery 100 after 500 cycles at ambient temperature (25°C) first gradually increases and then gradually decreases. Therefore, when $4 \leq L \leq 10$, $3.76 \leq k_1 \leq 17.14$ and $0.6 \leq k_2 \leq 23.53$, the cylindrical battery 100 has relatively high electrolyte solution wetting amount, discharge capacity and cycle capacity retention rate.

From the test results for Examples 3 and 11 to 15 in Table 1, it can be seen that with the gradual increase of the spacing d between adjacent tabs 112 and the increase of the $k_1$ and $k_2$ values, the electrolyte solution wetting amount of the cylindrical battery 100 gradually increases, the discharge capacity of the cylindrical battery 100 first gradually increases and then gradually decreases, and the cycle capacity retention rate of the cylindrical battery 100 after 500 cycles at

ambient temperature (25°C) first gradually increases and then gradually decreases. Therefore, when $1 \leq d \leq 5$, $3.76 \leq k_1 \leq 17.14$ and $0.6 \leq k_2 \leq 23.53$, the cylindrical battery 100 has relatively high electrolyte solution wetting amount, discharge capacity and cycle capacity retention rate.

From the test results for Comparative Example 1 in Table 1, it can be seen that when the diameter L of the central hole 13 of the electrode assembly 10 is too small and the spacing d between two adjacent tabs 112 is zero (i.e. there is no spacing), the $k_1$ and $k_2$ values are also too small, such that the electrolyte solution wetting amount of the cylindrical battery 100 is significantly reduced, and the discharge capacity and the cycle capacity retention rate of the cylindrical battery 100 are also reduced.

From the test results for Comparative Example 2 in Table 1, it can be seen that when the diameter L of the central hole 13 of the electrode assembly 10 and the spacing d between two adjacent tabs 112 are both too large, the $k_2$ value is also too large, such that the electrolyte solution wetting amount of the cylindrical battery 100 is significantly reduced, and the discharge capacity and the cycle capacity retention rate of the cylindrical battery 100 are also reduced. However, comparing with Comparative Example 1, the electrolyte solution wetting amount and the cycle capacity retention rate of Comparative Example 2 are higher.

From the test results for Examples 3 and 16 to 21 in Table 1, it can be seen that with the increase of the mass fraction y of the electrolyte salt in the electrolyte solution and the decrease of the $k_1$ value, the electrolyte solution wetting amount of the cylindrical battery 100 by the gradually decreases, the discharge capacity cylindrical battery 100 first gradually increases and then gradually decreases, and the cycle capacity retention rate of the cylindrical battery 100 after 500 cycles at ambient temperature (25°C) first gradually increases and then gradually decreases. Therefore, when $8.75\ wt\% \leq y \leq 16.2\ wt\%$ and $3.76 \leq k_1 \leq 17.14$, the cylindrical battery 100 has relatively high electrolyte solution wetting amount, discharge capacity and cycle capacity retention rate.

From the test results for Comparative Example 3 in Table 1, it can be seen that when the mass ratio A of the cyclic carbonate to the linear carbonate in the electrolyte solution and the mass fraction y of the electrolyte salt in the electrolyte solution are both too low, the electrolyte solution wetting amount of the cylindrical battery 100 and the discharge capacity of the cylindrical battery 100 are both high, but the cycle capacity retention rate of the cylindrical battery 100 after 500 cycles is significantly reduced.

From the test results for Comparative Example 4 in Table 1, it can be seen that when the mass ratio A of the cyclic carbonate to the linear carbonate in the electrolyte solution, the mass fraction y of the electrolyte salt in the electrolyte solution, the diameter L of the central hole 13 of the electrode assembly 10 and the distance d between two adjacent tabs 112 are all too small, the $k_1$ value is also too small, such that the electrolyte solution wetting amount of the cylindrical battery 100, the discharge capacity and the cycle capacity retention rate of the cylindrical battery 100 are reduced.

In summary, the cylindrical battery 100 of the present application has a high electrolyte solution wetting amount, which is greater than or equal to 145 g, and can even reach 166 g. The cylindrical battery 100 of the present application also has a high discharge capacity, which is greater than or equal to 50.13. The cylindrical battery 100 of the present application also has a high cycle capacity retention rate, and the ambient temperature cycle capacity retention rate is greater than or equal to 90.1%, and can even reach 96.54%.

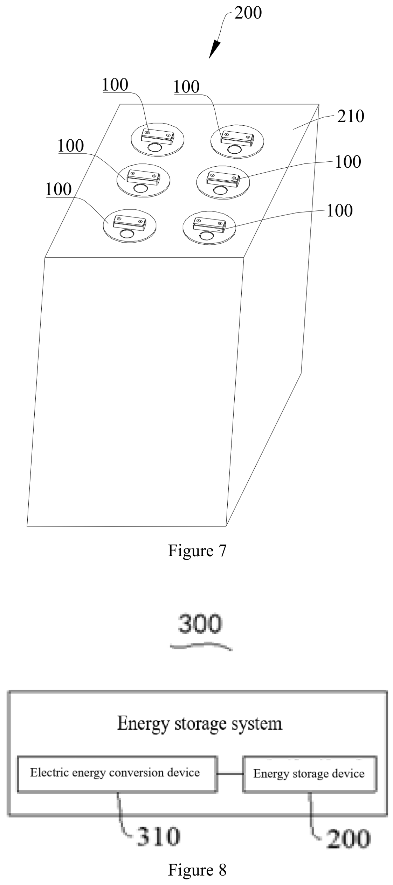

Referring to Figure 7, the present application further provides an energy storage device 200, which comprises a housing 210 and a plurality of the cylindrical batteries 100 of the present application. The plurality of cylindrical batteries 100 are contained in the housing 210.

It can be understood that the plurality of cylindrical batteries 100 of the energy storage device 200 may be connected in parallel; or in series; or partially in parallel and partially in series (i.e. mixed connection). The present application does not impose any specific restriction on the connection method of the plurality of cylindrical batteries 100 of the same energy storage device 200.

Optionally, the energy storage device 200 may be at least one of a small energy storage box, a large energy storage cabinet, an energy storage module, etc. The present application does not impose any specific restriction on the form of the energy storage device 200. The form of the energy storage device 200 described in the present application is merely one of its numerous forms and should not be understood as a limitation on the energy storage device 200 of the present application.

It should be noted that the stacking arrangement of the plurality of cylindrical batteries 100 can be that the plurality of cylindrical batteries 100 are arranged in sequence against each other, or the plurality of cylindrical batteries 100 are arranged in sequence and spaced apart. In addition, the plurality of cylindrical batteries 100 can be stacked in a transverse direction (e.g., a horizontal direction) or a longitudinal direction (e.g., a gravity direction). The stacking method and stacking direction of the plurality of cylindrical batteries 100 can be designed according to actual conditions.

It can be understood that the housing 210 has receiving cavities (not shown), and plurality of cylindrical batteries 100 are received in the receiving cavities. In some embodiments, each receiving cavity receives one cylindrical battery 100. In other embodiments, each receiving cavity receives a plurality of cylindrical batteries 100.

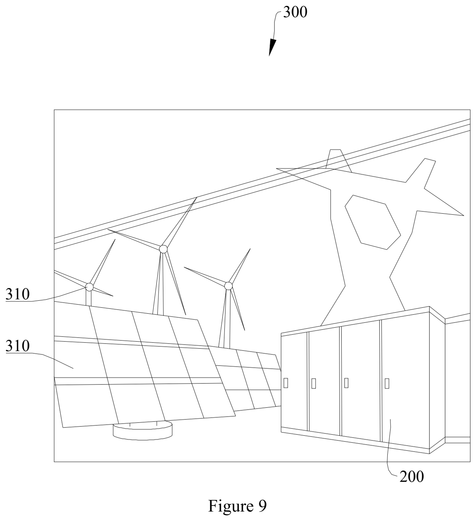

Referring to Figures 8 and 9, the present application further provides an energy storage system 300, which comprises the energy storage device 200 of the present application; and an electric energy conversion device 310, which

is electrically connected to the energy storage device 200, and is arranged to convert other forms of energy into electric energy, wherein the energy storage device 200 is arranged for storing said electric energy.

Energy storage has a wide range of application scenarios, including power generation side energy storage, grid side energy storage, and power consumption side energy storage. The energy storage system 300 of the present application is illustrated in detail taking the power generation side energy storage as an example, which should not be understood as a limitation on the energy storage system 300 of the present application, nor should it be understood as a limitation on the energy storage device 200 and the cylindrical battery 100 of the present application.

Optionally, the electric energy conversion device 310 can convert at least one other form of energy, such as solar energy, light energy, wind energy, thermal energy, tidal energy, biomass energy and mechanical energy, into electric energy.

Optionally, the number of the electric energy conversion device 310 may be one or more. When there are multiple electric energy conversion devices 310, they may be connected in series, in parallel, or in mixed connection, which is not specifically limited in the present application.

Optionally, the electric energy conversion device 310 may be, but is not limited to, at least one of a photovoltaic panel, a wind power generation device, a hydropower generation device, etc.

Optionally, the number of the energy storage device 200 may be one or more. When there are multiple energy storage devices 200, they are connected in series or in parallel, which is not specifically limited in the present application.

When working, the electric energy conversion device 310 is used to convert other forms of energy into electrical energy and store it in the energy storage device 200. The electrical energy stored in the energy storage device 200 may be supplied to electrical loads such as street lamps and household appliances when the electricity price is at a peak, or to supply power during power grid disconnection/outrage. The electrical energy generated by the electric energy conversion device 310 can also be supplied to the power grid through high-voltage cables to alleviate the power supply pressure of the power grid during peak hours.

Reference to "embodiment" herein means that a specific feature, structure, or characteristic described in conjunction with the embodiment may be included in at least one embodiment of the present application. The appearance of this phrase in various locations in the Description does not necessarily refer to the same embodiment, nor is it an independent or alternative embodiment that is mutually exclusive with other embodiments. It would be explicitly and implicitly understood by a person skilled in the art that an embodiment described herein may be combined with other embodiments. In addition, it should also be understood that the features, structures or characteristics described in various embodiments of the present application can be arbitrarily combined to form another embodiment that does not depart from the spirit and scope of the technical solutions of the present application, provided that there is no contradiction among them.

Finally, it should be noted that the above embodiments are only used to illustrate the technical solutions of the present application and are not intended to limit the same. Although the present application has been described in detail with reference to the above preferred embodiments, a person having ordinary skills in the art should understand that the technical solution of the present application may be modified or replaced by equivalents without departing from the spirit and scope of the technical solutions of the present application.

## Claims

1. A cylindrical battery, **characterized in that** the cylindrical battery comprises:

   an electrolyte solution comprising an electrolyte salt and an organic solvent, the electrolyte salt having a mass fraction of y wt% in the electrolyte solution; and
   an electrode assembly comprising an electrode sheet, the electrode sheet comprising a current collector and a plurality of tabs electrically connected to the current collector, the plurality of tabs being spaced on a same side of the current collector, with the spacing between two adjacent tabs being d in mm; the electrode assembly having a winding structure and having a central hole with a diameter of L in mm;
   wherein the battery also satisfies the relationship $d=10k_1 \cdot y\text{-}L$, wherein $k_1$ has a range satisfying 3.7 mm $\leq k_1 \leq$ 17.14 mm.

2. The cylindrical battery according to claim 1, **characterized in that** the organic solvent comprises a cyclic carbonate and a linear carbonate, in which a mass ratio of the cyclic carbonate to the linear carbonate in the electrolyte solution is A; and
   the battery satisfies the relationship $L \cdot d=10k_2 \cdot A$, wherein $k_2$ has a range satisfying 0.6 $mm^2 \leq k_2 \leq$ 23.53 $mm^2$.

3. The cylindrical battery according to claim 1, **characterized in that** the mass fraction y wt% of the electrolyte salt in the

electrolyte solution has a range satisfying 8.75 wt% $\leq$ y wt% $\leq$ 16.2 wt%.

4. The cylindrical battery according to claim 1 or 2, **characterized in that** the spacing d between two adjacent tabs has a range satisfying 1 mm $\leq$ d $\leq$ 5 mm.

5. The cylindrical battery according to claim 1 or 2, **characterized in that** the central hole of the electrode assembly has a diameter L in a range satisfying 5 mm $\leq$ L $\leq$ 10 mm.

6. The cylindrical battery according to claim 2, **characterized in that** the mass ratio A of the cyclic carbonate to the linear carbonate in the electrolyte solution has a range satisfying 0.17 $\leq$ A $\leq$ 0.67.

7. The cylindrical battery according to claim 1, **characterized in that** the electrode assembly is wound by M rounds, the M rounds comprise N steps, each step comprises a plurality of rounds, each round of the electrode sheet comprises a plurality of tabs, the plurality of tabs of each step have a same size, and from the outermost round to the innermost round of the electrode assembly, the tabs in different steps have gradually decreased width and gradually decreased height, wherein M > N.

8. The cylindrical battery according to claim 7, **characterized in that** a number N of the steps of the electrode assembly has a range satisfying 2 $\leq$ N $\leq$ 10.

9. The cylindrical battery according to claim 7, **characterized in that** a number n of the tabs of the electrode sheet has a range satisfying 400 $\leq$ n $\leq$ 2000.

10. The cylindrical battery according to claim 7, **characterized in that** the tab in the step of the electrode assembly closest to the central hole has a height h1 in a range satisfying 2 mm $\leq$ h1 $\leq$ 6 mm.

11. The cylindrical battery according to claim 7, **characterized in that**, where the electrode assembly has a winding structure, the step farthest from the central hole has a radial width w1 in a range satisfying 100 mm $\leq$ w1 $\leq$ 300 mm.

12. The cylindrical battery according to claim 7, **characterized in that** the electrode sheet comprises a tab-free area, which is arranged close to the central hole and connected to the step closest to the central hole, and when the electrode assembly is flattened, the tab-free area has a length s1 in a range satisfying 100 mm $\leq$ s1 $\leq$ 500 mm.

13. The cylindrical battery according to claim 7, **characterized in that** the electrode sheet corresponding to the innermost step of the electrode assembly, when flattened, has a length s2 in a range satisfying 300 mm $\leq$ s2 $\leq$ 500 mm.

14. An energy storage device, **characterized in that** the energy storage device comprises:

    a housing; and
    a plurality of cylindrical batteries according to any one of claims 1 to 13, contained in the housing.

15. An energy storage system, **characterized in that** the energy storage system comprises:

    an energy storage device according to claim 14; and
    an electric energy conversion device, which is electrically connected to the energy storage device, and is arranged to convert other forms of energy into electric energy, wherein the energy storage device is arranged for storing said electric energy.

100
30
20
A
A

Figure 1

100
20
10
11a/11
11b/11
12
L
13

Figure 2

11
d
112
112
112
112
112
14
111
15
15
15
15
s2
s1

Figure 3

10
14
15
15
15
15
15
13

Figure 4

11a
113a
111a
112a
113a

Figure 5

11b
113b
111b
112b
113b

Figure 6

200
100
100
210
100
100
100
100

Figure 7

300

Energy storage system
Electric energy conversion device
Energy storage device
310
200

Figure 8

300

310
310
200

Figure 9

# EUROPEAN SEARCH REPORT

Application Number
EP 26 16 5302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2022/278431 A1 (PARK JONG-SIK [KR] ET AL) 1 September 2022 (2022-09-01)<br>* paragraphs [0358] - [0385] *<br>* paragraph [0612] *<br>* figures 1-8, 30-31 *<br>----- | 1,2,4,5, 7-15<br>3,6 | INV.<br>H01M10/0587<br>H01M10/12<br>H01M10/0569<br>H01M50/533<br>H01M50/538 |
| Y | US 2024/405251 A1 (PARK JONG-SIK [KR] ET AL) 5 December 2024 (2024-12-05)<br>* paragraphs [0534] - [0536] *<br>----- | 3,6 | |

TECHNICAL FIELDS SEARCHED (IPC)

H01M

The present search report has been drawn up for all claims

| Place of search | Date of completion of the search | Examiner |
|---|---|---|
| Munich | 5 August 2026 | Kelly, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 16 5302

This annex lists the patent family members relating to the patent documents cited in the above-mentioned European search report. The members are as contained in the European Patent Office EDP file on
The European Patent Office is in no way liable for these particulars which are merely given for the purpose of information.

05-08-2026

| Patent document cited in search report | Publication date | Patent family member(s) | Publication date |
|---|---|---|---|
| US 2022278431 A1 | 01-09-2022 | US 2022271344 A1 | 25-08-2022 |
| | | US 2022271345 A1 | 25-08-2022 |
| | | US 2022271402 A1 | 25-08-2022 |
| | | US 2022271403 A1 | 25-08-2022 |
| | | US 2022271405 A1 | 25-08-2022 |
| | | US 2022278431 A1 | 01-09-2022 |
| | | US 2023121876 A1 | 20-04-2023 |
| | | US 2023130340 A1 | 27-04-2023 |
| | | US 2023133740 A1 | 04-05-2023 |
| | | US 2023246243 A1 | 03-08-2023 |
| | | US 2023246245 A1 | 03-08-2023 |
| | | US 2023291015 A1 | 14-09-2023 |
| | | US 2024396094 A1 | 28-11-2024 |
| | | US 2025364606 A1 | 27-11-2025 |
| | | US 20260058222 A1 | 26-02-2026 |
| US 2024405251 A1 | 05-12-2024 | CA 3235877 A1 | 27-04-2023 |
| | | CN 116014374 A | 25-04-2023 |
| | | CN 218827726 U | 07-04-2023 |
| | | EP 4376138 A1 | 29-05-2024 |
| | | JP 7807538 B2 | 27-01-2026 |
| | | JP 2024537123 A | 10-10-2024 |
| | | KR 20230058303 A | 03-05-2023 |
| | | US 2024405251 A1 | 05-12-2024 |
| | | WO 2023068891 A1 | 27-04-2023 |

EPO FORM P0459

For more details about this annex : see Official Journal of the European Patent Office, No. 12/82